# EUROPÄISCHE PATENTSCHRIFT

(11) **EP 3 083 805 B1**
(45) Veröffentlichungstag und Bekanntmachung des Hinweises auf die Patenterteilung: **20.02.2019**
(21) Anmeldenummer: 13811239.6
(22) Anmeldetag: 20.12.2013
(51) Int. Cl.: C08K 7/14, C08K 7/06, C08L 77/06, C08L 77/02, C08K 3/014, C08K 5/00, B29C 70/52

(54) **LANGFASER-VERSTÄRKTE POLYAMIDE**
LONG-FIBRE-REINFORCED POLYAMIDES
POLYAMIDES RENFORCÉS PAR DES FIBRES LONGUES

(43) Veröffentlichungstag der Anmeldung: 26.10.2016
(73) Patentinhaber: EMS-Patent AG, 7013 Domat/Ems (CH)
(72) Erfinder: HARDER, Philipp, CH-7000 Chur (CH); PFLEGHAR, Mark, CH-7013 Domat/Ems (CH)
(74) Vertreter: Pfenning, Meinig & Partner mbB
(86) Internationale Anmeldenummer: PCT/EP2013/077634
(87) Internationale Veröffentlichungsnummer: WO 2015/090435

(56) Entgegenhaltungen:
- EP-A1- 1 882 719
- EP-A1- 2 169 008
- WO-A1-2009/055947
- WO-A1-2011/134930
- "ASTM D 1003-11 Standard Test Method for Haze and Luminous Transmittance of Transparent Plastics", ASTM DESIGNATION, ASTM INTERNATIONAL, US, Bd. ASTM D 1003-11, 1. Januar 2011 (2011-01-01), Seiten 223-229, XP009179395,
- ZETTLER M ET AL: "STAND DER VERARBEITUNGS- UND ANWENDUNGSTECHNIK BEI LANGFASERVERSTAERKTEN THERMOPLASTEN", KUNSTSTOFFE, CARL HANSER VERLAG, MUNCHEN, DE, vol. 79, no. 9, 1 September 1989 (1989-09-01), pages 797-803, XP000175038, ISSN: 0023-5563

## Beschreibung

Die vorliegende Erfindung betrifft mit Endlosglasfasern und/oder Endloskohlenstofffasern verstärkte Polyamidformmassen auf Basis amorpher oder mikrokristalliner Polyamide. Mit der Erfindung können erstmals Formkörper aus Polyamidformmassen hergestellt werden, die bezüglich ihrer mechanischen Eigenschaften wie Zugfestigkeit, Schlageigenschaften und Verzug gegenüber den Polyamidformmassen des Standes der Technik mit kurzen Fasern, deutlich überlegen sind. Die Erfindung betrifft weiterhin Endlosglasfaser- und/oder Endloskohlenstofffaser-verstärkte Stäbchengranulate sowie ein Verfahren zu deren Herstellung.

Polyamide sind heutzutage weit verbreitet als Strukturelemente für den Innen- und Außenbereich, was im Wesentlichen auf die hervorragenden mechanischen Eigenschaften zurückzuführen ist. Eine Verbesserung der mechanischen Eigenschaften, wie Festigkeit und Steifheit lässt sich insbesondere durch den Einsatz von faserförmigen Verstärkungsstoffen, z.B. Glasfasern, erreichen.

So beschreibt die EP 2 060 607 A1 eine Polyamidformmasse, die aus einem teilkristallinen und amorphen Polyamid besteht und bei der flache Langglasfasern, d.h. Langglasfasern mit einem nicht runden Querschnitt als Füllmaterial eingearbeitet sind. Die Polyamidmischung nach der EP 2 060 607 A1 besteht bezüglich der Polyamidmatrix aus 55 bis 85 Gew.-% mindestens eines aliphatischen Polyamids. Die mechanischen Eigenschaften bezüglich des Verzugs sind aber nicht befriedigend. Weiterhin ist aus der EP 0 725 114 B1 eine Polyamidmischung bekannt, bei der ebenfalls langfaserige Verstärkungsstoffe in der Polyamidmischung enthalten sind, jedoch besteht die Polyamidformmasse jeweils aus kristallinen, thermoplastischen Polyamiden und amorphen, thermoplastischen Polyamiden, die untereinander inkompatibel sind, d.h. hier entstehen zwei Phasen.

EP 1 882 719 A1 betrifft Polyamidformmassen, die bei guten mechanischen Eigenschaften einen sehr geringen Verzug aufweisen. Erreicht wird dies durch eine Kombination von transparentem Polyamid mit faserförmigen Verstärkungsstoffen sowie partikulären Füllstoffen. Verwendung finden die erfindungsgemäßen Formmassen für die Herstellung beliebiger Formkörper,Halbzeuge bzw. Fertigteile.

EP 2 169 008 A1 beschreibt eine mit Glas gefüllte amorphe Polyamidharzzusammensetzung. Der Glasfüllstoff enthält, bezogen auf die Masse der Oxide ausgedrückt, 68 bis 74% Siliziumdioxid, 2 bis 5% Aluminiumoxid, 2 bis 5% Boroxid, 2 bis 10% Calciumoxid, 0 bis 5% Zinkoxid, 0 bis 5% Strontiumoxid, 0 bis 1% Bariumoxid, 1 bis 5% Magnesiumoxid, 0 bis 5% Lithiumoxid, 5 bis 12% Natriumoxid und 0 bis 10% Kaliumoxid, wobei die Gesamtmenge von Lithiumoxid, Natriumoxid und Kaliumoxid 8 bis 12% beträgt.

WO 2011/134930 A1 betrifft thermoplastische Formmassen enthaltend A) 10 bis 89 Gew.-% eines Polyamids, B) 10 bis 60 Gew.-% eines faserförmigen Verstärkungsmaterials mit einer Faserlänge von 3 bis 24 mm, C) 1 bis 20 Gew.-% mindestens eines Polyolefin, aufgebaut aus Ethylen oder Propylen oder Mischungen davon, wobei polare funktionelle Gruppen ausgeschlossen sind, D) 0 bis 5 Gew .-% mindestens eines nanopartikulären Oxids oder Oxidhydrats oder deren Mischungen mindestens eines Metalls oder Halbmetalls mit einem zahlengewichteten mittleren Durchmesser der Primärpartikel von 0,5 bis 50 nm und einer hydrophoben Partikeloberfläche, E) 0 bis 40 Gew.% weiterer Additive, wobei die Summe der Komponenten A) bis E) 100% beträgt.

WO 2009/055947 A1 beschreibt eine Polyamid-Formmasse aus den folgenden Bestandteilen: (A) 25-70 Gew.-% aliphatisches Polyamid, ausgewählt aus der Gruppe PA1010, PA1012, PA1014, PA1210, PA1212, PA1214, PA12 und PAI 1 oder eine Mischung zweier oder mehrerer dieser Systeme; (B) 8-35 Gew.-% transparentes Polyamid, ausgewählt aus der Gruppe MACM9-36, MACM9-36/PACM9-36, MACMI/12, MACMI/MACMT/12, oder eine Mischung zweier oder mehrerer dieser Systeme; (C) 10-60 Gew.-% Verstärkungsstoffe; (D) 0-30 Gew.-% teilchen- und/oder schichtförmige Füllstoffe; (E) 0-5 Gew.-% Hilfsstoffe und/oder Additive wobei die Summe der Komponenten (A)-(E) 100 Gew.-% ausmacht, und wobei wenigstens teilweise als Verstärkungsstoffe (C) Fasern eingesetzt sind, deren Querschnittsfläche entweder kreisförmig ist oder aber bei welchen das Abmessungsverhältnis von der Haupt-Querschnittsachse zur Neben-Querschnittsachse unterhalb von 2 liegt.

Ausgehend hiervon war es deshalb die Aufgabe der vorliegenden Erfindung, eine Polyamidformmasse bereitzustellen, die neben ausgezeichneten mechanischen Eigenschaften wie verbesserte Zugfestigkeit und Schlageigenschaften, gleichzeitig einen sehr geringen Verzug aufweist.

Die Aufgabe wird durch eine Polyamidformmasse gemäß Patentanspruch 1 gelöst. Die abhängigen Ansprüche stellen vorteilhafte Ausführungsformen dar.

Die Polyamidformmasse nach der Erfindung zeichnet sich somit dadurch aus, dass das Polyamid mindestens ein amorphes oder mikrokristallines Polyamid ist mit der Maßgabe, dass das Polyamid A eine Lichttransmission eines Prüfkörpers nach ASTM D 1003 von mindestens 80 % aufweist und dass in einer derartigen Polyamidformmasse 20 bis 85 Gew.-% Endlosfasern mit rundem Querschnitt sowie gegebenenfalls Additive enthalten sind. Die in Anspruch 1 enthaltenen Maßgaben bezüglich der Lichttransmission gilt nur für Formmassen ohne Endlosfasern.

Es hat sich nun gezeigt, dass sich eine derartige Polyamidformmasse zu Formkörpern verarbeiten lässt, die hervorragende Eigenschaften aufweisen. Dies zeigt sich in der Kombination aus sehr guten Reißfähigkeiten, Schlag- und Kerbschlagzähigkeiten mit sehr geringem Verzug. Der Verzug wird bestimmt als Differenz der Verarbeitungsschwindung quer und längs.

Wesentlich bei der erfindungsgemäßen Formmasse ist es, dass für die Polyamide A die vorstehend genannten Bedingungen für die Lichttransmission eingehalten werden.

Die amorphen oder mikrokristallinen Polyamiden weisen eine Schmelzwärme von maximal 25 J/g auf, bevorzugt sind diejenigen mit einer Schmelzwärme von maximal 12 J/g, besonders bevorzugt von maximal 3 J/g und ganz besonders bevorzugt von maximal 1 J/g. Auch diese Maßgabe ist nur auf die Polyamide ohne Fasern bezogen.

Des Weiteren zeigen die Polyamide A eine Lichttransmission gemessen nach ASTM D 1003 an Prüfkörpern der Dicke 2 mm von mindestens 80 % und somit eine hohe Transparenz. Bevorzugt werden Polyamide A verwendet, deren Prüfkörper eine Lichttransmission von mindestens 85 %, besonders bevorzugt von mindestens 88 % sowie ganz besonders bevorzugt von mindestens 90 % erreichen.

Für den Fall, dass mikrokristalline Polyamide verwendet werden, handelt es sich hierbei um eine Morphologie, bei der die Kristallite eine so kleine Dimension haben, dass noch eine Transparenz, wie vorstehend beschrieben, erreicht wird.

Gemäß der Erfindung wird weiterhin ein gewisser Anteil, und zwar bis zu 27 Gew.-% des amorphen öder mikrokristallinen Polyamids durch ein aliphatisches Polyamid ersetzt, wobei das Gewichtsverhältnis der Polyamide A) zu den Polyamiden A1) 9:1 bis 2:1 beträgt. Wird die Obergrenze von 27 Gew.-% nicht eingehalten, resultieren ansonsten nachteilige Eigenschaften bezüglich der Transparenz ihres Compounds. Wobei hier als wesentliche Voraussetzung gegeben ist, dass die Polyamide A und A1 kompatibel sind, so dass die Lichttransmission eines Compounds der Polyamide A und A1 mindestens 80 % beträgt. Die Bedingungen nach Anspruch 3 gelten nur für die Polyamidformmassen ohne Endlosfasern. Bevorzugt ist es dabei weiterhin, wenn das Gewichtsverhältnis des Polyamid A zu den Polyamiden A1 6:1 bis 3:1 und besonders bevorzugt 5:1 bis 3,5:1 beträgt.

Es hat sich zusätzlich als günstig erwiesen, wenn die relative Viskosität der Polyamide A oder A11,35 bis 2,15, bevorzugt 1,40 bis 1,80, besonders bevorzugt 1,45 bis 1,60 beträgt, gemessen in 0,5 g in 100 ml m-Kresol bei 20°C.

Vorteilhaft ist weiterhin, wenn mindestens eines der Polyamide A oder A1 aminterminiert ist. Aminterminiert heißt dabei, dass das Polyamid mehr Aminoendgruppen als Carboxylendgruppen besitzt. Dies kann durch die Regelung der Polykondensation des Polyamids in einer dem Fachmann bekannten Weise mit difunktionellen oder monofunktionellen Aminen oder Carbonsäuren erfolgen.

Bezüglich der mengenmäßigen Zusammensetzung der Polyamidformmasse nach der Erfindung ist es bevorzugt, wenn die Endlosfasern mit einem Gewichtsanteil von 25 bis 80 Gew.-%, bevorzugt von 30 bis 70 Gew.-%, besonders bevorzugt von 35 bis 65 Gew.-% bezogen auf die gesamte Polyamidformmasse enthalten sind. Die Additive (Merkmal C) können vorzugsweise mit einem Gewichtsanteil von 0,01 bis 10 Gew.-%, bevorzugt mit einem Gewichtsanteil von 0,1 bis 5 %, bezogen auf die gesamte Polyamidformmasse, enthalten sein. Der Gewichtsanteil jedes einzelnen Additivs beträgt dabei maximal 4 Gew.-%.

Aus stofflicher Sicht ist die Endlosfaser mit rundem Querschnitt eine Glasfaser oder eine Kohlenstofffaser.

Das mindestens eine amorphe oder mikrokristalline Polyamid A ist bevorzugt ausgewählt aus PA MACM12/PACM12, PA PACM12, PA MACMI/12, PA NDT/INDT, PA MACM14, PA MACMI/MACMT/12, PA 6I/6T/MACMI/MACMT/12, PA 61/6T/MACMI/MACMT, PA MACMI/MACMT/MACM12, PA MACMI/MACM12 und Mischungen hiervon. Bevorzugt besteht die Gruppe aus PA MACM12, PA MACM12/PACM12, PA MACMI/12, PA NDT/INDT, PA MACM14, PA MACMI/MACMT/12, PA 61/6T/MACMI/MACMT/12, PA MACMI/MACMT/MACM12, PA MACMI/MACM12 und Mischungen hiervon. Besonders bevorzugt besteht die Gruppe aus PA MACM12, PA MACM12/PACM12, PA MACMI/12, PA MACMI/MACMT/12, PA 61/6T/MACMI/MACMT/12, PA MACMI/MACMT/MACM12 und Mischungen hiervon.

Der Anteil des PACM12 im PA MACM12/PACM12 beträgt bevorzugt maximal 50 Mol-%. PA MACM12/PACM12 mit maximal 50 Mol-% PACM12 sind amorph und zeigen somit keinen Schmelzpunkt.

Bei den mikrokristallinen Polyamiden beträgt der Schmelzpunkt gemessen nach ISO 11537 maximal 252 °C. Amorphe Polyamide zeigen aufgrund ihrer Amorphizität keinen Schmelzpunkt. Das aliphatische Polyamid A1 weist gemessen nach ISO 11537 einen Schmelzpunkt von maximal 252 °C auf.

Die aliphatischen Polyamide A1 sind ausgewählt aus PA 11, PA 12, PA 1010, PA 1212, PA 1012, PA 1210, PA 69, PA 610, PA 612, PA 6/12 und Mischungen oder Copolyamiden hiervon. Bevorzugt sind die aliphatischen Polyamide A1 ausgewählt aus PA 12, PA 1010 und Mischungen hiervon.

Die verwendeten Schreibweisen und Abkürzungen für Polyamide und deren Monomere entsprechen der ISO-Norm 1874-1:1992. Die Schreibweise PA NDT/INDT beispielsweise steht für ein Polyamid gebildet aus 2,2,4-Trimethylhexamethylendiamin, 2,4,4-Trimethylhexamethylendiamin und Terephthalsäure.

Die beim Pulltrusionsverfahren als Endlosfasern (Roving) eingesetzten Glas- oder Carbonfasern können mit einem geeigneten Schlichte- oder Haftvermittlersystem ausgerüstet sein. Dazu können zum Beispiel Systeme auf Basis von Silanen, Titanaten, Polyamiden, Urethanen, Polyhydroxyether, Epoxiden, Nickel respektive Kombinationen oder Mischungen davon verwendet werden.

Die Endlosglasfasern weisen einen Durchmesser von 10 bis 20 µm, bevorzugt von 10 bis 18 µm, besonders bevorzugt von 10 bis 14 µm, ganz besonders bevorzugt von 10 bis 12 µm auf. Dünnere Fasern führen dabei zu höheren Zähigkeiten. Bei Durchmessern unter 10 µm ist jedoch die für den Pulltrusionsvorgang nötige Festigkeit der Faser nicht mehr gegeben.

Die Endlosglasfasern können aus allen Glassorten, wie z.B. A-, C-, D-, E-, M-, S-, R-Glas, oder beliebigen Mischungen bestehen. Bevorzugt sind Glasfasern aus E-Glas oder Glasfasern aus Mischungen mit E-Glas oder Mischungen mit E-Glasfasern.

Die Endloscarbonfasern weisen einen Durchmesser von 3 bis 12 µm, bevorzugt 4 bis 10 µm, besonders bevorzugt 5 bis 9 µm auf.

Bei den Additiven können an für sich alle aus dem Stand der Technik bekannten Additive eingesetzt werden. Beispiele hierfür sind Additive, die ausgewählt sind aus anorganischen Stabilisatoren, organischen Stabilisatoren, Gleitmitteln, Farb- und Markierungsstoffen, anorganischen Pigmenten, organischen Pigmenten, IR-Absorber, Antistatika, Antiblockmitteln, Kristallisationsverzögerern, Kondensationskatalysatoren, Kettenreglern, Entschäumern, kettenverlängernden Additiven, Graphit, Kohlenstoffnanoröhrchen, Entformungsmitteln, Trennmitteln, optischen Aufhellern, photochromen Additiven, Weichmachern, metallischen Pigmenten, Metallflittern, metallbeschichteten Partikeln, Füll- und Verstärkungsstoffen, insbesondere nanoskalige Füll- und Verstärkungsstoffen, wie z.B. Mineralen mit einer Partikelgrösse von maximal 100 nm oder unmodifizierte oder modifizierte, natürliche oder synthetische Phyllosilikate oder Mischungen davon. Als Stabilisatoren bzw. Alterungsschutzmittel können in den erfindungsgemäßen Polyamidformmassen, z.B. Antioxidantien, Antiozonantien, Lichtschutzmittel, UV-Stabilisatoren, UV-Absorber oder UV-Blocker enthalten sein.

Bei der erfindungsgemäßen Polyamidformmasse ist es auch nicht erforderlich, dass zwingend ein Flammschutzmittel eingesetzt wird. Erfindungsgemäß umfasst somit eine Ausführungsform der Erfindung eine Polyamidformmasse wie vorstehend beschrieben, jedoch ohne Flammschutzmittel.

Erfindungsgemäß umfasst eine weitere Ausführungsform der Erfindung eine Polyamidformmasse wie vorstehend beschrieben, jedoch ohne Ruß.

Die Herstellung der Polyamide sowohl der amorphen bzw. mikrokristallinen Polyamide wie auch der aliphatischen Polyamide erfolgt, wie an für sich im Stand der Technik bekannt, durch Umsetzung von im Wesentlichen molaren Mengen der entsprechenden Diamine und Dicarbonsäuren und ggf. Lactamen und/oder Aminocarbonsäuren.

Die erfindungsgemäßen Polyamidformmassen können durch die bekannten Verfahren zur Herstellung von Endlosfaser-verstärktem Stäbchengranulat hergestellt werden, insbesondere durch Pultrusionsverfahren, bei denen der Endlosfaserstrang mit der Polymerschmelze vollständig durchtränkt und anschließend abgekühlt und geschnitten wird. Dass auf diese Art und Weise erhaltene Endlosfaser-verstärkte Stäbchengranulat, das bevorzugt eine Granulatlänge von 3 bis 25 mm, insbesondere von 4 bis 12 mm aufweist, kann mit den üblichen Verarbeitungsverfahren (wie z.B. Spritzgießen, Pressen) zu Formteilen weiter verarbeitet werden, wobei besonders gute Eigenschaften des Formteils mit schonenden Verarbeitungsverfahren erreicht werden. In diesem Zusammenhang bedeutet "schonend" vor allem, dass ein übermäßiger Faserbruch und die damit einhergehende starke Reduktion der Faserlänge weitgehend vermieden wird. Beim Spritzguss bedeutet dies, dass Schnecken mit großem Durchmesser verwendet werden sollten.

Nachfolgend wird die Erfindung anhand von Ausführungsbeispielen näher beschrieben.

Die bei den Versuchen verwendeten Prüfkörper wurden auf einer Spritzgussmaschine der Firma Arburg, Modell Allrounder 420 C 1000-250 hergestellt. Dabei wurden aufsteigende Zylindertemperaturen von 230 °C bis maximal 295 °C verwendet. Die Formtemperatur betrug 80 °C - ausser bei den Platten für die Verarbeitungsschwindung, welche mit einer Formtemperatur von 90 °C hergestellt wurden. Bei den Rundplatten für die Messung der Lichttransmission wurden hochglanzpolierte Formen verwendet.

In den nachfolgenden Tabellen 1 und 2 sind die verwendeten Ausgangsstoffe sowie deren genaue chemische Bezeichnung und der Hersteller angeführt.

**Tabelle 1**

| **Komponenten** | **Beschreibung** | | **Hersteller** |
|---|---|---|---|
| PA MACM12 | amorphes Polyamid MACM12 aus Bis(3-methyl-4-amino-cyclohexyl)methan und Dodecandisäure | | EMS-CHEMIE AG, Schweiz |
| | RV* 1,52 (gemessen mit 0,5 g in 100 ml m-Kresol bei 20 °C) | | |
| | Glasübergangstemperatur 155 °C | | |
| PA MACMI/12 | amorphes Polyamid MACMI/12 im Molverhältnis 65/35 aus Bis(3-methyl-4-amino-cyclohexyl)methan, isophthalsäure und Laurinlactam | | EMS-CHEMIE AG, Schweiz |
| | RV* 1,53 (gemessen mit 0,5 g in 100 ml m-Kresol bei 20 °C) | | |
| | Glasübergangstemperatur 160 °C | | |
| PA MACMI/MACMT/MACM12 | amorphes Polyamid MACMI/MACMT/MACM12 im Molverhältnis 27/27/46 aus Bis(3-methyl-4-amino-cyclohexyl)methan, Isophthalsäure, Terephthalsäure und Dodecandisäure | | EMS-CHEMIE AG, Schweiz |
| | RV* 1,54 (gemessen mit 0,5 g in 100 ml m-Kresol bei 20 °C) | | |
| | Glasübergangstemperatur 200 °C | | |
| PA 12 | Polyamid 12 aus Laurinlactam | | EMS-CHEMIE AG, Schweiz |
| | RV* 1,58 (gemessen mit 0,5 g in 100 ml m-Kresol bei 20 °C) Schmelzpunkt 178 °C | | |
| PA 1010 | Polyamid 1010 aus Decan-1,6-diamin und 1,10-Decandisäure | | EMS-CHEMIE AG, Schweiz |
| | RV* 1,54 (gemessen mit 0,5 g in 100 ml m-Kresol bei 20 °C) | | |
| | Schmelzpunkt 200 °C | | |
| PA 610 | Polyamid 610 aus Hexamethylendiamin und Sebazinsäure | | EMS-CHEMIE AG, Schweiz |
| | RV* 1,52 (gemessen mit 0,5 g in 100 ml m-Kresol bei 20 °C) | | |
| | Schmelzpunkt 221 °C | | |
| Glasfasern, endlos | Glasfasern, endlos (Roving) | Tufrov 4510 | Nitto Boseki Co., LTD., Japan |
| | Durchmesser 17 µm | | |
| Glasfasern, kurz | Glasfasern | 995 EC10-4.5 | Saint-Gobain Vetrotex, Frankreich |
| | 4,5 mm lang, Durchmesser 10 µm | | |
| Hitzestabilisator | N,N'-Hexan-1,6-diylbis[3-(3,5-di-tert-butyl-4-hydroxyphenyl-propionamid | Irganox 1098 | BASF, Deutschland |
| UV-Stabilisator | Phenol, 2-(2H-benzotriazol-2=yl)-4,6-bis(1-methyl-1-1phenylethyl) | Tinuvin 234 | BASF, Deutschland |
| | CAS-Nr. 70321-86-7 | | |

| | | | |
|---|---|---|---|
| *RV relative Viskosität | | | |

**Tabelle 2**

| | **Einheit** | **Beispiele und Vergleichsbeispiele** | | | | | | | | | |
|---|---|---|---|---|---|---|---|---|---|---|---|
| | | **1** | **2** | **3** | **4** | **5** | **6** | **7** | **8** | **9** | **10^{a)}** |
| **PA MACM12** | Gew.-% | 56 | 40 | 32 | 43 | 38 | 40 | 40 | - | - | 50 |
| **PA MACMI/12** | Gew.-% | - | - | - | - | - | - | - | 40 | - | - |
| **PA MACMI/MACMT/ MACM12** | Gew.-% | - | - | - | - | - | - | - | - | 40 | - |
| **PA 12** | Gew.-% | 14 | 10 | 8 | 7 | 12 | - | - | 10 | 10 | - |
| **PA 1010** | Gew.-% | - | - | - | - | - | 10 | - | - | - | - |
| **PA 610** | Gew.-% | - | - | - | - | - | - | 10 | - | - | - |
| **Glasfasern, endlos** | Gew.-% | 30 | 50 | 60 | 50 | 50 | 50 | 50 | 50 | 50 | 50 |
| **Hitzestabilisator** | Gew.-% | 0,25 | 0,25 | 0,25 | 0,25 | 0,25 | 0,25 | 0,25 | 0,25 | 0,25 | 0,25 |
| **UV-Stabilisator** | Gew.-% | 0,15 | 0,15 | 0,15 | 0,15 | 0,15 | 0,15 | 0,15 | 0,15 | 0,15 | 0,15 |
| | | | | | | | | | | | |
| **Zug-E-Modul** | MPa | 7300 | 12500 | 15500 | 12400 | 12100 | 12300 | 12600 | 13100 | 12900 | 12400 |
| **Reissfestigkeit** | MPa | 160 | 215 | 238 | 215 | 210 | 200 | 186 | 188 | 182 | 180 |
| **Reissdehnung** | % | 2,6 | 2,3 | 1,9 | 2,4 | 2,3 | 2,1 | 1,8 | 1,7 | 1,6 | 2,0 |
| **Schlagzähigkeit Charpy 23 °C** | kJ/m2 | 69 | 90 | 95 | 79 | 75 | 70 | 62 | 64 | 63 | 70 |
| **Kerbschlagzähigkeit Charpy 23°C** | kJ/m2 | 18 | 35 | 37 | 30 | 27 | 24 | 22 | 23 | 22 | 20 |
| **Verarbeitungsschwindung längs quer** | % | 0.10 | 0.05 | 0.05 | 0.05 | 0.05 | 0.05 | 0.05 | 0.08 | 0.10 | 0.06 |
| | % | 0.25 | 0.10 | 0.08 | 0.10 | 0.10 | 0.10 | 0.10 | 0.14 | 0.20 | 0.13 |
| **Verzug**** | % | 0,15 | 0,05 | 0,03 | 0,05 | 0,05 | 0,05 | 0,05 | 0,06 | 0,10 | 0,07 |

| | | | | | | | | | | | |
|---|---|---|---|---|---|---|---|---|---|---|---|
| a) 10 stellt das einzige Vergleichsbeispiel in Tabelle 2 dar. | | | | | | | | | | | |

In Tabelle 3 sind die erfindungsgemäßen Beispiele und in Tabelle 4 die Vergleichsbeispiele und deren mechanische Eigenschaften aufgeführt.

Wie aus Tabelle 3 hervorgeht, zeigen die erfindungsgemäßen Formkörper gegenüber denjenigen der Vergleichsbeispiele die verbesserte mechanische Eigenschaften auf. So ist sowohl die Schlagzähigkeit wie auch die Kerbschlagzähigkeit denjenigen der Vergleichsbeispiele deutlich überlegen. Die erfindungsgemäßen Polyamidformmassen bzw. die daraus hergestellten Formkörper zeichnet sich somit durch überlegene mechanische Eigenschaften aus.

**Tabelle 3**

| | **Einheit** | **Vergleichsbeispiele** | | | | | |
|---|---|---|---|---|---|---|---|
| | | **11** | **12** | **13** | **14** | **15** | **16** |
| **PA MACM12** | Gew.-% | 56 | 40 | 32 | 40 | | 50 |
| **PA MACMI/MACMT/ MACM12** | Gew.-% | - | - | - | - | 40 | - |
| **PA 12** | Gew.-% | 14 | 10 | 8 | - | 10 | - |
| **PA 1010** | Gew.-% | - | - | - | 10 | - | - |
| **Glasfasern, kurz** | Gew.-% | 30 | 50 | 60 | 50 | 50 | 50 |
| **Hitzestabilisator** | Gew.-% | 0,25 | 0,25 | 0,25 | 0,25 | 0,25 | 0,25 |
| **UV-Stabilisator** | Gew.-% | 0,15 | 0,15 | 0,15 | 0,15 | 0,15 | 0,15 |
| | | | | | | | |
| **Zug-E-Modul** | MPa | 6640 | 13400 | 16150 | 12900 | 13500 | 12800 |
| **Reissfestigkeit** | MPa | 130 | 177 | 189 | 180 | 176 | 168 |
| **Reissdehnung** | % | 3,6 | 2,6 | 2,3 | 2,5 | 2,0 | 2,8 |
| **Schlagzähigkeit Charpy 23 °C** | kJ/m2 | 64 | 66 | 50 | 60 | 30 | 62 |
| **Kerbschlagzähigkeit Charpy 23°C** | kJ/m2 | 12 | 16 | 14 | 14 | 11 | 14 |
| **Verarbeitungsschwindung längs** | % | 0.10 | 0.03 | 0.02 | 0.02 | 0.04 | 0.05 |
| **quer** | % | 0.30 | 0.22 | 0.18 | 0.23 | 0.27 | 0.25 |
| **Verzug**** | % | 0,20 | 0,19 | 0,16 | 0,21 | 0,23 | 0,20 |

Die in den Tabellen 3 und 4 angegebenen Eigenschaften wurden nach den folgenden Methoden bestimmt:
Die Prüfkörper wurden in trockenem Zustand verwendet, dazu wurden sie nach dem Spritzguss mindestens 48 h bei Raumtemperatur in trockener Umgebung, d.h. über Silicagel gelagert.

### Schmelzwärme und Schmelzpunkt:

ISO 11357
Granulat
Die Differential Scanning Calorimetry (DSC) wurde mit einer Aufheizrate von 20 K/min durchgeführt. Beim Schmelzpunkt wird die Temperatur am Peakmaximum angegeben.

### Lichttransmission:

ASTM D 1003
Platte, Dicke 2 mm, 60 x 60 mm
Temperatur 23 °C
Messgerät Haze Gard plus der Firma Byk Gardner mit CIE Lichtart C. Der Lichttransmissionswert wird in % der eingestrahlten Lichtmenge angegeben.

### Zug-E-Modul:

ISO 527 mit einer Zuggeschwindigkeit von 1 mm/min
ISO-Zugstab, Norm: ISO/CD 3167, Typ A1, 170 x 20/10 x 4 mm, Temperatur 23 °C

### Reissfestigkeit und Reissdehnung:

ISO 527 mit einer Zuggeschwindigkeit von 5 mm/min
ISO-Zugstab, Norm: ISO/CD 3167, Typ A1, 170 x 20/10 x 4 mm,
Temperatur 23 °C

### Schlagzähigkeit nach Charpy:

ISO 179/*eU
ISO-Prüfstab, Norm: ISO/CD 3167, Typ B1, 80 x 10 x 4 mm,
Temperatur 23 °C
*1 = nicht instrumentiert, 2 = instrumentiert

### Kerbschlagzähigkeit nach Charpy:

ISO 179/*eA
ISO-Prüfstab, Norm: ISO/CD 3167, Typ B1, 80 x 10 x 4 mm,
Temperatur 23 °C
*1 = nicht instrumentiert, 2 = instrumentiert

### Verarbeitungsschwindung:

ISO 294-4
Platte, Typ D2, 60 x 60 x 2 mm (gemäss Norm ISO 294-3)
Die Verarbeitungsschwindung wird längs und quer zur Fliessrichtung in Bezug auf die Formnestgrösse bestimmt. Angegeben wird der arithmetische Mittelwert aus den Messungen an 5 Platten.

## Patentansprüche

1. Polyamid-Formmasse enthaltend:
A) mindestens ein amorphes oder mikrokristallines Polyamid, mit der Maßgabe, dass ein Prüfkörper des Polyamids A) eine Lichttransmission nach ASTM D 1003 an Prüfkörpern der Dicke 2 mm und bei einer Temperatur von 23°C gemessen von mindestens 80 % und eine Schmelzwärme nach ISO 11357 von < 25 J/g aufweist, wobei wenn ein mikrokristallines Polyamid vorliegt dieses einen nach ISO 11537 bestimmten Schmelzpunkt von maximal 252°C aufweist und wobei bis zu 27 Gew.-% des Polyamids A) bezogen auf die gesamte Formmasse, durch ein aliphatisches Polyamid A1) ausgewählt aus der Gruppe bestehend aus PA 11, PA 12, PA 1010, PA 1212, PA 1012, PA 1210, PA 69, PA 610, PA 612, PA 6/12 und Mischungen oder Copolyamiden hiervon ersetzt ist, wobei die Polyamide A) und A1) kompatibel sind, so dass die Lichttransmission nach ASTM D 1003 an Prüfkörpern der Dicke 2 mm und bei einer Temperatur von 23°C gemessen eines Compounds der Polyamide A) und A1) mindestens 80 % beträgt und das Gewichtsverhältnis der Polyamide A) zu den Polyamiden A1) 9:1 bis 2:1 beträgt
B) 20 bis 85 Gew.-% einer Endlosglasfaser und/oder eine Endloskohlenstofffaser mit rundem Querschnitt sowie
C) 0 bis 10 Gew.-% mindestens eines Additivs,
wobei sich die Komponenten A) bis C) auf 100 Gew.-% ergänzen.

2. Polyamid-Formmasse nach Anspruch 1, **dadurch gekennzeichnet, dass** das Polyamid A) eine Schmelzwärme nach ISO 11357 von maximal 12 J/g, bevorzugt von maximal 3 J/g, besonders bevorzugt von maximal 1 J/g aufweist und ein Prüfkörper der Dicke 2 mm des Polyamids A) eine Lichttransmission nach ASTM D 1003, von mindestens 80 %, bevorzugt von mindestens 85 %, besonders bevorzugt von mindestens 88 % sowie ganz besonders bevorzugt von mindestens 90 % zeigt.

3. Polyamid-Formmasse nach Anspruch 1, **dadurch gekennzeichnet, dass** bis zu 27 Gew.-% des Polyamids A) bezogen auf die gesamte Formmasse, durch ein aliphatisches Polyamid A1) ersetzt ist, wobei die Polyamide A) und A1) kompatibel sind und das Gewichtsverhältnis der Polyamide A) zu den Polyamiden A1) 6:1 bis 3:1, bevorzugt 5:1 bis 3,5:1 beträgt und die Lichttransmission eines Prüfkörpers der Dicke 2 mm eines Compounds aus A) und A1) mindestens 80 %, bevorzugt mindestens 85 %, besonders bevorzugt mindestens 88 %, und ganz besonders bevorzugt mindestens 90 % beträgt.

4. Polyamid-Formmasse nach einem der Ansprüche 1 bis 3, **dadurch gekennzeichnet, dass** die relative Viskosität der Polyamide A) oder A1) 1,35 bis 2,15, bevorzugt 1,40 bis 1,80, besonders bevorzugt 1,45 bis 1,60 beträgt, gemessen mit 0,5 g in 100ml m-Kresol bei 20°C.

5. Polyamid-Formmasse nach einem der Ansprüche 1 bis 4, **dadurch gekennzeichnet, dass** mindestens eines der Polyamide A) oder A1) aminterminiert ist.

6. Polyamid-Formmasse nach mindestens einem der Ansprüche 1 bis 5, **dadurch gekennzeichnet, dass** die Endlosglasfasern und/oder Endloskohlenstofffasern mit einem Gewichtsanteil von 25 bis 80 Gew.-%, bevorzugt von 30 bis 70 Gew.-%, besonders bevorzugt von 35 bis 65 Gew.-%, bezogen auf die gesamte Polyamid-Formmasse, enthalten sind.

7. Polyamid-Formmasse nach mindestens einem der Ansprüche 1 bis 6, **dadurch gekennzeichnet, dass** die Additive (Merkmal C) mit einem Gewichtsanteil von 0,01 bis 10 Gew.-%, bevorzugt mit einem Gewichtsanteil 0,1 bis 5 Gew.-%, bezogen auf die gesamte Polyamid-Formmasse, enthaltend sind.

8. Polyamid-Formmasse nach mindestens einem der Ansprüche 1 bis 7, **dadurch gekennzeichnet, dass** das mindestens eine amorphe oder mikrokristalline Polyamid A) ausgewählt ist aus PA MACM12, PA MACM12/PACM12, PA PACM12, PA MACMI/12, PA 6-3-T, PA MACM14, PA MACMI/MACMT/12, PA 61/6T/MACMI/MACMT/12, PA 61/6T/MACMI/MACMT, PA MACMI/MACMT/MACM12, PA MACMI/MACM12 und Mischungen hiervon.

9. Polyamid-Formmasse nach mindestens einem der Ansprüche 1 bis 8, **dadurch gekennzeichnet, dass** die Additive ausgewählt sind aus anorganischen Stabilisatoren, organischen Stabilisatoren, Gleitmitteln, Farb- und Markierungstoffen, anorganischen Pigmenten, organischen Pigmenten, IR-Absorber, Antistatika, Antiblockmitteln, Kristallisationsverzögerern, Kondensationskatalysatoren, Kettenreglern, Entschäumern, kettenverlängernden Additiven, Leitfähigkeitsadditiven, Russ, Graphit, Kohlenstoffnanoröhrchen, Entformungsmitteln, Trennmitteln, optischen Aufhellern, photochromen Additiven, Weichmachern, metallischen Pigmenten, Metallflittern, metallbeschichteten Partikeln, Füll- und Verstärkungsstoffen, insbesondere nanoskalige Füll- und Verstärkungsstoffen, wie z.B. Mineralen mit einer Partikelgrösse von maximal 100 nm oder unmodifizierte oder modifizierte, natürliche oder synthetische Phyllosilikate oder Mischungen davon.

10. Polyamid-Formmasse nach mindestens einem der Ansprüche 1 bis 9, **dadurch gekennzeichnet, dass** sie kein Flammschutzmittel enthält.

11. Polyamid-Formmasse nach mindestens einem der Ansprüche 1 bis 10, **dadurch gekennzeichnet, dass** sie als Endlosglasfaser-und/oder Endloskohlenstoffaser- verstärktes Stäbchengranulat vorliegt.

12. Polyamid-Formmasse nach Anspruch 11, **dadurch gekennzeichnet, dass** die Granulatlänge 3 bis 25 mm, bevorzugt 4 bis 12 mm, ist.

13. Verfahren zur Herstellung eines Enlosglasfaser- und/oder Endloskohlenstofffaser- verstärkten Stäbchengranulats nach einem der Ansprüche 11 oder 12, **dadurch gekennzeichnet, dass** eine Polyamid-Formmasse nach mindestens einem der Ansprüche 1 bis 8 einem Pultrusionsverfahren unterzogen wird.

## Claims

1. Polyamide moulding compound comprising:
A) at least one amorphous or microcrystalline polyamide, with the proviso that a test specimen of the polyamide A) has light transmittance according to ASTM D 1003 measured on specimens of thickness 2 mm and at a temperature of 23°C of at least 80% and a heat of fusion according to ISO 11357 of < 25 J/g, where, in the case of a microcrystalline polyamide, this has a melting point determined according to ISO 11537 of not more than 252°C and where up to 27% by weight of the polyamide A) based on the overall moulding compound has been replaced by an aliphatic polyamide A1) selected from the group consisting of PA 11, PA 12, PA 1010, PA 1212, PA 1012, PA 1210, PA 69, PA 610, PA 612, PA 6/12 and mixtures or copolyamides thereof, where the polyamides A) and A1) are compatible, such that light transmittance according to ASTM D 1003, measured on specimens of thickness 2 mm and at a temperature of 23°C, of a compound of the polyamides A) and A1) is at least 80% and the weight ratio of the polyamides A) to the polyamides A1) is 9:1 to 2:1,
B) 20% to 85% by weight of a continuous glass fibre and/or a continuous carbon fibre having round cross section and
C) 0% to 10% by weight of at least one additive,
where components A) to C) add up to 100% by weight.

2. Polyamide moulding compound according to Claim 1, **characterized in that** the polyamide A) has a heat of fusion according to ISO 11357 of not more than 12 J/g, preferably of not more than 3 J/g, more preferably of not more than 1 J/g, and a specimen of thickness 2 mm of the polyamide A) has light transmittance according to ASTM D 1003 of at least 80%, preferably of at least 85%, more preferably of at least 88% and most preferably of at least 90%.

3. Polyamide moulding compound according to Claim 1, **characterized in that** up to 27% by weight of the polyamide A) based on the overall moulding compound has been replaced by an aliphatic polyamide A1), where the polyamides A) and A1) are compatible and the weight ratio of the polyamides A) to the polyamides A1) is 6:1 to 3:1, preferably 5:1 to 3.5:1, and the light transmittance of a specimen of thickness 2 mm of a compound of A) and A1) is at least 80%, preferably at least 85%, more preferably at least 88% and most preferably at least 90%.

4. Polyamide moulding compound according to any of Claims 1 to 3, **characterized in that** the relative viscosity of the polyamides A) or A1) is 1.35 to 2.15, preferably 1.40 to 1.80, more preferably 1.45 to 1.60, measured with 0.5 g in 100 ml of m-cresol at 20°C.

5. Polyamide moulding compound according to any of Claims 1 to 4, **characterized in that** at least one of the polyamides A) or A1) is amine-terminated.

6. Polyamide moulding compound according to at least one of Claims 1 to 5, **characterized in that** the continuous glass fibres and/or continuous carbon fibres are present at a proportion by weight of 25% to 80% by weight, preferably of 30% to 70% by weight, more preferably of 35% to 65% by weight, based on the overall polyamide moulding compound.

7. Polyamide moulding compound according to at least one of Claims 1 to 6, **characterized in that** the additives (feature C) are present in a proportion by weight of 0.01% to 10% by weight, preferably in a proportion by weight of 0.1% to 5% by weight, based on the overall polyamide moulding compound.

8. Polyamide moulding compound according to at least one of Claims 1 to 7, **characterized in that** the at least one amorphous or microcrystalline polyamide A) is selected from PA MACM12, PA MACM12/PACM12, PA PACM12, PA MACMI/12, PA 6-3-T, PA MACM14, PA MACMI/MACMT/12, PA 6I/6T/MACMI/MACMT/12, PA 61/6T/MACMI/MACMT, PA MACMI/MACMT/MACM12, PA MACMI/MACM12 and mixtures thereof.

9. Polyamide moulding compound according to at least one of Claims 1 to 8, **characterized in that** the additives are selected from inorganic stabilizers, organic stabilizers, lubricants, dyes and markers, inorganic pigments, organic pigments, IR absorbers, antistats, antiblocking agents, crystallization retardants, condensation catalysts, chain transfer agents, defoamers, chain-extending additives, conductivity additives, carbon black, graphite, carbon nanotubes, demoulding agents, separating agents, optical brighteners, photochromic additives, plasticizers, metallic pigments, metal flakes, metal-coated particles, fillers and reinforcers, especially nanoscale fillers and reinforcers, for example minerals having a particle size of not more than 100 nm, or unmodified or modified, natural or synthetic phyllosilicates or mixtures thereof.

10. Polyamide moulding compound according to at least one of Claims 1 to 9, **characterized in that** it does not comprise any flame retardants.

11. Polyamide moulding compound according to at least one of Claims 1 to 10, **characterized in that** it takes the form of continuous glass fibre- and/or continuous carbon fibre-reinforced elongated pellets.

12. Polyamide moulding compound according to Claim 11, **characterized in that** the pellet length is 3 to 25 mm, preferably 4 to 12 mm.

13. Process for producing continuous glass fibre- and/or continuous carbon fibre-reinforced elongated pellets according to either of Claims 11 and 12, **characterized in that** a polyamide moulding compound according to at least one of Claims 1 to 8 is subjected to a pultrusion process.

## Revendications

1. Mélange à mouler de polyamides contenant :
A) au moins un polyamide amorphe ou microcristallin, à la condition qu'une éprouvette du polyamide A) présente un facteur de transmission de la lumière, mesuré selon ASTM D 1003 sur des éprouvettes de 2 mm d'épaisseur et à une température de 23 °C, d'au moins 80 %, et une chaleur de fusion selon ISO 11357 < 25 J/g, et, en présence d'un polyamide microcristallin, présente un point de fusion déterminé selon ISO 11537 au maximum de 252 °C, et jusqu'à 27 % en poids du polyamide A), par rapport au mélange à mouler total, étant remplacés par un polyamide aliphatique A1) choisi dans le groupe consistant en PA 11, PA 12, PA 1010, PA 1212, PA 1012, PA 1210, PA 69, PA 610, PA 612, PA 6/12 et les mélanges ou copolymères de ceux-ci, les polyamides A) et A1) étant compatibles, de telle sorte que le facteur de transmission de la lumière, mesuré selon ASTM D 1003 sur des éprouvettes de 2 mm d'épaisseur et à une température de 23 °C, d'un mélange des polyamides A) et A1) soit d'au moins 80 %, le rapport en poids des polyamides A) aux polyamides A1) étant de 9:1 à 2:1,
B) 20 à 85 % en poids d'une fibre de verre continue et/ou d'une fibre de carbone continue à section transversale circulaire, ainsi que
C) 0 à 10 % en poids d'au moins un additif,
la somme des proportions des composants A) à C) étant de 100 % en poids.

2. Mélange à mouler de polyamides selon la revendication 1, **caractérisé en ce que** le polyamide A) présente une chaleur de fusion selon ISO 11357 au maximum de 12 J/g, de préférence au maximum de 3 J/g, d'une manière particulièrement préférée au maximum de 1 J/g, et une éprouvette de 2 mm d'épaisseur du polyamide A) présente un facteur de transmission de la lumière selon ASTM D 1003 d'au moins 80 %, de préférence d'au moins 85 %, d'une manière particulièrement préférée d'au moins 88 % et d'une manière tout particulièrement préférée d'au moins 90 %.

3. Mélange à mouler de polyamides selon la revendication 1, **caractérisé en ce que** jusqu'à 27 % en poids du polyamide A), par rapport au mélange à mouler total, sont remplacés par un polyamide aliphatique A1), les polyamides A) et A1) étant compatibles, et le rapport en poids des polyamides A) aux polyamides A1) étant de 6:1 à 3:1, de préférence de 5:1 à 3,5:1, et le facteur de transmission de la lumière d'une éprouvette de 2 mm d'épaisseur d'un mélange de A) et A1) étant d'au moins 80 %, de préférence d'au moins 85 %, d'une manière particulièrement préférée d'au moins 88 % et d'une manière tout particulièrement préférée d'au moins 90 %.

4. Mélange à mouler de polyamides selon l'une des revendications 1 à 3, **caractérisé en ce que** la viscosité des polyamides A) ou A1) est de 1,35 à 2,15, de préférence de 1,40 à 1,80, d'une manière particulièrement préférée de 1,45 à 1,60, mesurée avec 0,5 g dans 100 ml de m-crésol à 20 °C.

5. Mélange à mouler de polyamides selon l'une des revendications 1 à 4, **caractérisé en ce qu'**au moins l'un des polyamides A) ou A1) présente une terminaison amine.

6. Mélange à mouler de polyamides selon au moins l'une des revendications 1 à 5, **caractérisé en ce que** les fibres de verre continues et/ou les fibres de carbone continues sont présentes selon une proportion en poids de 25 à 80 % en poids, de préférence de 30 à 70 % en poids, d'une manière particulièrement préférée de 35 à 65 % en poids, par rapport à la totalité du mélange à mouler de polyamides.

7. Mélange à mouler de polyamides selon l'une des revendications 1 à 6, **caractérisé en ce que** les additifs (caractéristique C) sont présents selon une proportion en poids de 0,01 à 10 % en poids, de préférence selon une proportion en poids de 0,1 à 5 % en poids, par rapport à la totalité du mélange à mouler de polyamides.

8. Mélange à mouler de polyamides selon l'une des revendications 1 à 7, **caractérisé en ce que** le ou les polyamides A) amorphes ou microcristallins sont choisis parmi PA MACM12, PA MACM12/PACM12, PA PACM12, PA MACMI/12, PA 6-3-T, PA MACM14, PA MACMI/MACMT/12, PA 61/6T/MACMI/MACMT/12, PA 61/6T/MACMI/MACMT, PA MACMI/MACMT/MACM12, PA MACMI/MACM12 et les mélanges de ceux-ci.

9. Mélange à mouler de polyamides selon au moins l'une des revendications 1 à 8, **caractérisé en ce que** les additifs sont choisis parmi les stabilisants inorganiques, les stabilisants organiques, les lubrifiants, les substances colorantes et de marquage, les pigments inorganiques, les pigments organiques, les absorbants IR, les antistatiques, les agents anti-adhérence de contact, les retardateurs de cristallisation, les catalyseurs de condensation, les régulateurs de chaîne, les antimoussants, les additifs prolongateurs de chaîne, les additifs de conductivité, le noir de carbone, le graphite, les nanotubes de carbone, les agents de démoulage, les démoulants, les azurants optiques, les additifs photochromes, les plastifiants, les pigments métalliques, les flocons métalliques, les particules revêtues d'un métal, les charges et agents de renforcement, en particulier les charges et agents de renforcement à l'échelle nanométrique, comme par exemple les minéraux ayant une granulométrie maximale de 100 nm ou les phyllosilicates naturels ou synthétiques, modifiés ou non modifiés, ou les mélanges de ceux-ci.

10. Mélange à mouler de polyamides selon l'une des revendications 1 à 9, **caractérisé en ce qu'**il ne contient pas de retardateur de flamme.

11. Mélange à mouler de polyamides selon l'une des revendications 1 à 10, **caractérisé en ce qu'**il se présente sous forme d'un granulé en bâtonnets renforcé par des fibres de verre continues et/ou des fibres de carbone continues.

12. Mélange à mouler de polyamides selon la revendication 11, **caractérisé en ce que** la longueur des granulés est de 3 à 25 mm, en particulier de 4 à 12 mm.

13. Procédé de fabrication d'un granulé en bâtonnets renforcé par des fibres de verre continues et/ou des fibres de carbone continues selon l'une des revendications 11 ou 12, **caractérisé en ce qu'**on soumet à une opération de pultrusion un mélange à mouler de polyamides selon l'une des revendications 1 à 8.
